# EUROPEAN PATENT APPLICATION

(11) **EP 4 245 592 A1**
(43) Date of publication of application: **20.09.2023**
(21) Application number: 23161261.5
(22) Date of filing: 10.03.2023
(51) Int. Cl.: B60L 3/00

(54) **ELECTRIC VEHICLE**

(30) Priority: 18.03.2022 JP 2022043436
(71) Applicant: TOYOTA JIDOSHA KABUSHIKI KAISHA, Aichi-Ken 471-8571 (JP)
(72) Inventor: KURIBARA, Fumiyoshi, TOYOTA-SHI, AICHI-KEN, 471-8571 (JP)
(74) Representative: Cabinet Beau de Loménie

(57) **Abstract**

The controller retains the supply power before receiving the connection signal in the disconnected state and calculates the remaining charging time, when a connection signal of the disconnection state is received by operating the connection switch while the charging device is charging the storage device using power from the external power source with the charging device connected to the external power source via the cable device, and further when the connection between the vehicle side connector and the cable side connector is detected by the connection detection device.

## Description

### Technical Field

The present disclosure relates to electric vehicles, in particular, to electric vehicles equipped with a charging device that charges a power storage device using power from an external power source.

### Background

Conventional electric vehicles of this type have been proposed that use power from an external power source to charge an on-board storage device (see, for example, Patent Document 1). This electric vehicle determines a charging schedule for the charging current and charging time of the storage device based on the required charge of the storage device and the scheduled charging end time specified by the user. This electric vehicle determines the charging schedule based on the minimum charging current that can supply the required charge amount to the storage device within the chargeable time from the current time to the scheduled end of charging within the range of current that can be supplied from the external power source.

### Citation List

### Patent Literature

PTL 1: JP2013-081324

### Summary

Many of the electric vehicles mentioned above use power supplied from an external power source during charging to calculate the time until charging is complete (remaining charging time). Some electric vehicles use a cable device to connect an external power source to an on-board charging device to charge the storage device. Some cable devices have a relay on the cable side power line that connects the power supply side power line of the external power source to the vehicle side power line to which the charging device is attached, and a switch that interrupts the power supply side power line and the vehicle side power line by the relay. In this case, if the power supply side power line and the vehicle side power line are interrupted by a switch operation while the storage device is being charged with power from an external power source, the supplied power becomes 0. This causes the remaining charge time to be cleared even though the user has not removed the cable device. In this case, when charging is restarted by another switch operation, it is treated as a new charge, giving the user a sense of discomfort.

The main purpose of the electric vehicle of the present disclosure is to deal more appropriately with the situation when charging is interrupted by the operation of a switch on the cable device connecting the charging device that charges the on-board power storage device to an external power source.

The electric vehicle of the present disclosure has adopted the following measures to achieve the main objectives described above.

The electric vehicle comprises:
a power storage device;
a charging device capable of charging the power storage device using power from an external power source;
a vehicle side connector that can be connected to a cable side connector of a cable device that connects the external power source to the charging device;
a connection detection device that detects presence or absence of a connection between the vehicle side connector and the cable side connector; and
a controller programmed to control the charging device when charging the power storage device using power from the external power source and calculates remaining charge time required to fully charge the power storage device based on supplied power from the external power source;
the electric vehicle is characterized in that
the cable device has a connection switch that connects and disconnects a power line from the external power source to the charging device, the connection switch transmitting a connection signal to the controller indicating a connection state in which the power line from the external power source to the charging device is connected and a disconnection state in which the connection is disconnected; and
the controller retains the supplied power before receiving the connection signal in the disconnected state and calculates the remaining charge time, when a connection signal of the disconnection state is received by operating the connection switch while the charging device is charging the power storage device using power from the external power source with the charging device connected to the external power source via the cable device, and further when the connection between the vehicle side connector and the cable side connector is detected by the connection detection device.

The electric vehicle of the present disclosure includes a power storage device; a charging device capable of charging the power storage device using power from an external power source; a vehicle side connector that can be connected to a cable side connector of a cable device that connects the external power source to the charging device; a connection detection device that detects presence or absence of a connection between the vehicle side connector and the cable side connector; and a controller that controls the charging device when charging the power storage device using power from the external power source and calculates remaining charge time required to fully charge the power storage device based on supplied power from the external power source. The cable device has a connection switch that connects and disconnects the power line from the external power source to the charging device, the connection switch transmitting a connection signal to the controller indicating the connection state in which the power line from the external power supply to the charging device is connected and the disconnection state in which the connection is disconnected. The controller retains the supply power before receiving the connection signal in the disconnected state and calculates the remaining charging time, when a connection signal of the disconnection state is received by operating the connection switch while the charging device is charging the power storage device using power from the external power source with the charging device connected to the external power source via the cable device, and further when the connection between the vehicle side connector and the cable side connector is detected by the connection detection device. The remaining charge time in this case would also be retained. As a result, the controller can more appropriately deal with the situation when charging is interrupted by the operation of the connection switch on the cable device that connects the charging device that charges the on-board storage device to the external power source.

In the electric vehicle of the present disclosure, the controller may clear the supplied power when the disconnection between the vehicle side connector and the cable side connector is detected by the connection detection device, when the connection signal of the disconnection state is received during charging of the power storage device. As a result, the remaining charge time can also be cleared more appropriately.

In the electric vehicle of the present disclosure, the controller may report the remaining charge time. As a result, the user can be informed of the remaining charge time. The notification may be a display showing the remaining charge time or an audible output of the charge time.

### Brief Description of Drawings

Figure 1 shows a schematic diagram of the configuration of the electric vehicle 20 of the embodiment of the present disclosure.
Figure 2 shows a circuit diagram of an example of a power conversion circuit 52.
Figure 3 shows a flowchart of an example of the remaining charge time calculation process executed by the electronic control unit 70.

### Description of Embodiments

The following is a description of the embodiment of this disclosure.

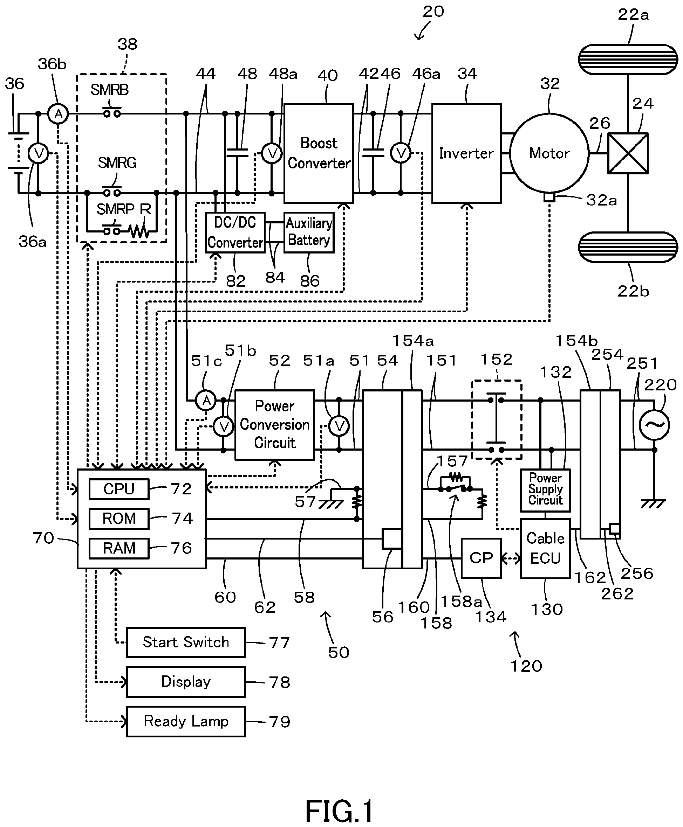

Figure 1 shows a schematic diagram of the configuration of the electric vehicle 20 of the embodiment of the present disclosure. As shown in Figure 1, the electric vehicle 20 of the embodiment includes a motor 32, an inverter 34, a battery 36, boost converter 40, high-voltage side power line 42, low-voltage side power line 44, system main relay 38, charger 50, charging power line 51, vehicle side inlet 54, and an electronic control unit 70. The vehicle side inlet 54 is connected to a connector 253 of a power supply 220 by a charging cable device 120.

The motor 32 is configured as a synchronous generator motor. The motor 32 has a rotor with embedded permanent magnets and a stator with three-phase coils wound around it. The rotor of the motor 32 is connected to the drive wheels 22a, 22b via differential gears 24 and is connected to a drive shaft 26 connected to the drive wheels 22a, 22b via a differential gear.

The inverter 34 is connected to the motor 32 and to the high voltage side power line 42. The inverter 34 is configured as a well-known inverter circuit having six transistors and six diodes.

The battery 36 is configured, for example, as a lithium-ion rechargeable battery or a nickel-metal hydride rechargeable battery. The battery 36 is connected to the low voltage side power line 44.

The boost converter 40 is connected to the high voltage side power line 42 and the low voltage side power line 44. The boost converter 40 is configured as a well-known boost-boost converter circuit having two transistors, two diodes, and a reactor.

A high voltage side capacitor 46 is connected to the positive and negative bus bars of the high voltage side power line 42. A low voltage side capacitor 48 is attached to the positive and negative bus bars of the low voltage side power line 44. A system main relay 38 is attached to the low voltage side power line 44. The system main relay 38 has a positive pole side relay SMRB, a negative pole side relay SMRG, and a precharge circuit. The positive pole side relay SMRB is attached to the positive bus bar of the low voltage side power line 44. The negative pole side relay SMRG is attached to the negative bus bar of the low voltage side power line 44. The precharge circuit is a circuit consisting of a precharge resistor R and a precharge relay SMRP connected in series, and the negative pole side relay It is installed to bypass the SMRG. The DC/DC converter 82 is connected to the low voltage side power line 44 and is also connected to the auxiliary power line 84 to which the auxiliary battery 86 and auxiliary equipment (not shown) are connected. The DC/DC converter 82 supplies power from the low voltage side power line 44 to the supply to the auxiliary power line 84 with a change in voltage. The DC/DC converter 82 also supplies power from the auxiliary power line 84 to the low voltage side power line 44 with the change in voltage.

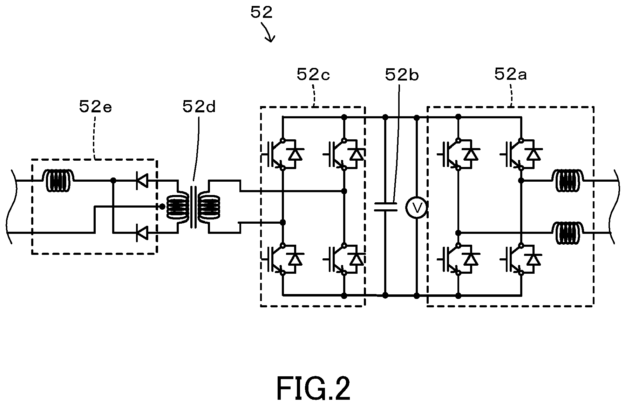

The charger 50 has a power conversion circuit 52 attached to the charging power line 51. The charging power line 51 has one end connected between the system main relay 38 and the boost converter 40 in the low voltage side power line 44. The charging power line 51 is connected at the other end to the vehicle side inlet 54. The power conversion circuit 52 is configured as a well-known power conversion circuit that converts AC power from the commercial power supply 220 into DC power of a desired voltage that can charge the battery 36. The power conversion circuit 52, for example, as shown in Figure 2, includes an AC/DC conversion circuit 52a, a smoothing capacitor 52b, a DC/AC conversion circuit 52c, and an AC/DC conversion circuit 52e. The AC/DC conversion circuit 52a converts AC power supplied from the commercial power supply 220 to DC power of the desired voltage. The DC/AC conversion circuit 52c converts DC power from the AC/DC conversion circuit 52a to AC power. The AC/DC conversion circuit 52e converts AC power transformed by transformer 52d to DC power.

The vehicle side inlet 54 is connected to the charging power line 51 as well as to the vehicle side ground line 57, which is grounded at the other end. The vehicle side inlet 54 is connected to the vehicle side connection line 58 whose other end is connected to the electronic control unit 70. The vehicle side inlet 54 is connected to the vehicle side communication line 60 whose other end is connected to the electronic control unit 70. The vehicle side inlet 54 has a lid sensor 56. The lid sensor 56 is connected to the lid signal line 62 whose other end is connected to the electronic control unit 70. The lid sensor 56 is a sensor that detects whether the lid (lid) covering the vehicle side inlet 54 is open or closed. The vehicle side ground line 57 is connected to the vehicle side connection line 58 via a resistor.

The charger 50 charges the battery 36 using power supply from the commercial power supply 220, when in the state of the vehicle side inlet 54 and the vehicle connector 154a of the charging cable device 120 are connected and the power supply connector 154b of the charging cable device 120 and the power supply side connector 254 are connected.

The charging cable device 120 includes a cable electronic control unit 130, a power supply circuit 132, control pilot circuit 134, a vehicle connector 154a, power supply connector 154b, the cable side power line 151, the charging relay 152, the cable side ground line 157, the cable side connection line 158, the connection switch 158a, and the cable side temperature sensing line 162. The charging relay 152 is attached to the cable side power line 151. The vehicle connector 154a of the charging cable device 120 is connected to the vehicle side inlet 54 and the power supply connector 154b of the charging cable device 120 is connected to the power supply side connector 254 of the commercial power supply 220. The charging power line 51 is then connected to the power supply side power line 251 of the commercial power supply 220 through the cable side power line 151. The vehicle side ground line 57 is connected to the cable side ground line 157. The vehicle side connection line 58 is connected to the cable side connection line 158. The vehicle side communication line 60 is connected to the cable side communication line 160. The cable side temperature sensing line 162 is connected to the power supply side temperature sensing line 262 that is connected to the temperature sensor 256. The temperature sensor 256 is attached to the power supply side connector 254. The power supply circuit 132 is connected to the cable side power line 151. The power supply connector 154b of the charging cable device 120 and the power supply side connector 254 of the commercial power supply 220 are connected, and the cable side power line 151 and the power supply side power line 251 of the commercial power supply 220 are connected, the power supply circuit 132 converts AC power supplied from the commercial power supply 220 to DC power of a predetermined voltage and supplies it to the cable ECU 130 and other devices. The control pilot circuit 134 has an oscillation circuit (not shown). The control pilot circuit 134 changes the duty cycle of the outgoing signal from the oscillation circuit using a control signal from the cable ECU 130, and outputs it to the cable side communication line 160. The connection switch 158a is connected to the vehicle side ground line 57 at one end. The connection switch 158a is connected to the cable side connection line 158 connected to the vehicle side connection line 58 at the other end via a resistor. The two ends of the connection switch 158a are connected via a resistor. The connection switch 158a is configured as a push-down switch that turns off when pushed down near the vehicle connector 154a. The cable ECU 130, which is not shown in the figure, is configured as a microprocessor with a CPU at its core. In addition to the CPU, the cable ECU 130 is equipped with a processing ROM for storing programs, RAM for temporarily storing data, input/output ports, and communication ports. The cable ECU 130 is connected to the cable side temperature sensing line 162 and inputs the supply connector temperature from the temperature sensor 240 attached to the power supply side connector 254. The cable ECU 130 inputs signals from the leakage current detection circuit (not shown) attached to the cable side power line 151. The cable ECU 130 outputs a drive signal to the charging relay 152. The cable ECU 130 communicates with the control pilot circuit 134. The cable ECU 130 sends the chargeable current (for example, current rating, power supply connector temperature, etc.) based on information obtained from the commercial power supply 220 as a control signal as a duty relative to the rated current to the control pilot circuit 134. The control pilot circuit 134 deity controls the outgoing signal from the oscillation circuit based on the control signal received from the cable ECU 130, and transmits it to the electronic control unit 70 via the cable side communication line 160 and the vehicle side communication line 60. When the connection switch 158a is pushed down and set to off, the cable ECU 130 turns off the charging relay 152 based on a signal from the electronic control unit 70 that detects it.

The electronic control unit 70 is configured as a microprocessor with a CPU 72 as its core. In addition to the CPU 72, the electronic control unit 70 includes a ROM74, RAM76, flash memory (not shown), input ports (not shown), output ports (not shown), and communication ports (not shown) and so on.

The electronic control unit 70 inputs signals from various sensors via input ports. Some of the input signals include, for example, the following.
(1) Rotational position θm from a rotational position detection sensor (e.g., resolver) 32a that detects the rotational position of the rotor of motor 32.
(2)Voltage VB from voltage sensor 36a mounted between the terminals of the battery 36.
(3)Current IB from the current sensor 36b attached to the output terminal of the battery 36.
(4)Voltage VH of the high voltage side capacitor 46(the high voltage side power line 42) from the voltage sensor 46a mounted between the terminals of the high voltage side capacitor 46.
(5)Voltage VL of the low voltage side capacitor 48(the low voltage side power line 44) from the voltage sensor 48a mounted between the terminals of the low voltage side capacitor 48.
(6) Supply voltage Vin from voltage sensor 51a attached to the charging power line 51.
(7)Charge voltage Vchg from voltage sensor 51b.
(8)Charging current Ichg from current sensor 51b.
(9)Voltage from the voltage sensor detecting the voltage between the terminals of the smoothing capacitor 52b in the power conversion circuit 52. The input port of the electronic control unit 70 is connected to the vehicle side connection line 58, which is connected to the vehicle side inlet 54, and is connected to the lid signal line 62 from the lid sensor 56, which is attached to the vehicle side inlet 54. The electronic control unit 70 also functions as a controller for the vehicle's drive. For this purpose, the electronic control unit 70 inputs information necessary for system startup and driving control.

This information may include, for example, the following.
(1) Start signal from the start switch 77.
(2) Shift position from the shift position sensor that detects the operating position of the shift lever.
(3)Accel opening from the accelerator pedal position sensor that detects the depressed position of the acceleration pedal.
(4)Brake pedal position from the brake pedal position sensor that detects the position of the brake pedal.
(5)Vehicle speed from speed sensor.

The electronic control unit 70 outputs various control signals via output ports.

The signals to be output include the following.
(1) Switching control signal to the transistor of the inverter 34.
(2) Switching control signal to the transistor of the boost converter 40.
(3)Drive control signal to the system main relay 38.
(4)Drive control signal to the power conversion circuit 52.
(5)Display signal to the display 78 located on the instrument panel in front of the driver's seat.
(6)Lighting signal to the ready lamp 79.
(7)Switching control signal to the transistor of the DC/DC converter 82.

The electronic control unit 70 communicates with the control pilot circuit 134 of the charging cable device 120, when the vehicle side communication line 60 connected to the communication port is connected to the cable side communication line 160. The electronic control unit 70 calculates the chargeable current Iin that is available to charge the battery 36 using power supply from the commercial power supply 220, based on a duty controlled outgoing signal from the control pilot circuit 134. The electronic control unit 70 calculates the chargeable power (infrastructure power) Pin based on the chargeable current Iin and the supply voltage Vin from voltage sensor 51a. The electronic control unit 70 calculates the storage ratio SOC of the battery 36 based on the integrated value of the current Ib of the battery 36 from the current sensor 36b. The storage ratio SOC is the ratio(percentage) of the amount of power that can be discharged from the battery 36 to the total capacity of the battery 36.

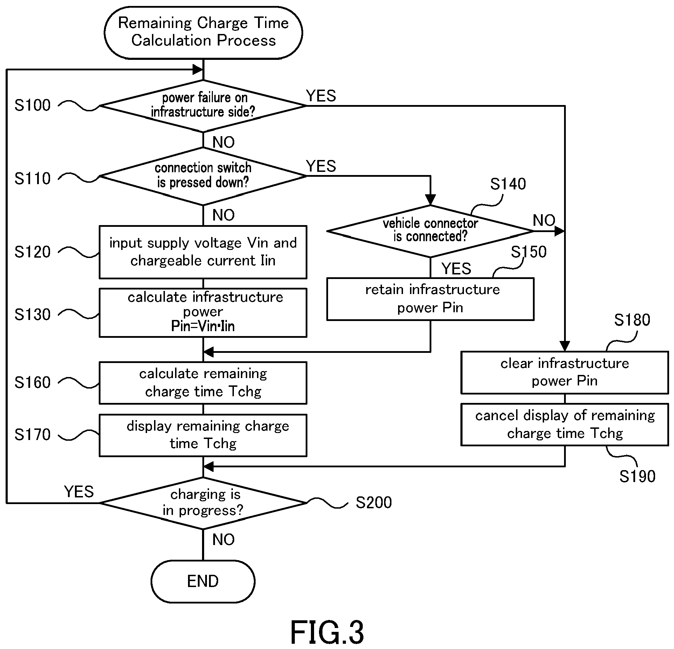

Next, the operation of the electric vehicle 20 of the embodiment thus configured will be described. In particular, the operation required to complete charging the battery 36 when charging the battery 36 using power supply from the commercial power supply 220 is described. Figure 3 shows a flowchart of an example of the remaining charge time calculation process performed by the electronic control unit 70 during the process of charging the battery 36 using power from the commercial power supply 220. The remaining charge time calculation process is executed, when the vehicle side inlet 54 is connected to the vehicle connector 154a of the charging cable device 120 and the power supply connector 154b of the charging cable device 120 is connected to the power supply side connector 254 of the commercial power supply 220 and the battery 36 starts charging with power supply from the commercial power supply 220.

Executing the remaining charge time calculation process, the electronic control unit 70 first determines whether or not there is a power failure on the commercial power supply 220 side (infrastructure side) (step S100) . This determination can be made based on whether or not power supply to the power supply circuit 132 has been made.

After determining in step S100 that there is no power failure on the infrastructure side, the electronic control unit 70 determines whether the connection switch 158a is pressed down and turned off by the user (step S110). In case the connection switch 158a is pushed down and turned off, as described above, the cable ECU 130 turns off the charging relay 152. During normal charging, the connection switch 158a is not operated by the user.

In case it is determined that the connection switch 158a is not pressed down by the user in step S100, the electronic control unit 70 inputs the supply voltage Vin from the voltage sensor 51a and the chargeable current Iin based on the outgoing signal from the control pilot circuit 134 (step S120). The electronic control unit 70 calculates the chargeable power (infrastructure power) Pin by multiplying the supply voltage Vin by the chargeable current Iin (step S130) . The electronic control unit 70 then calculates the remaining charge time Tchg by dividing the free capacity of battery 36 by the chargeable power Pin (step S160) . The free space in battery 36 can be calculated by multiplying the total capacity of battery 36 by (100 - storage ratio (SOC) /100. The electronic control unit 70 then reports the remaining charge time Tchg by displaying it on the display 78 (step S170) . The electronic control unit 70 determines whether the battery 36 is in the process of charging (step S200). In case it is determined that charging is in progress, the electronic control unit 70 returns to step S100(process to determine if there is a power failure on the infrastructure side) . In the case that there is no power failure on the infrastructure side and the connection switch 158a is not operated by the user, the electronic control unit 70 repeats the above process (step S100-S130, S160, S170, S200) during charging. The determination of whether or not the battery 36 is being charged is made by determining whether or not the battery 36 has been charged. The end of battery 36 charging is determined when the storage ratio SOC of battery 36 reaches 1 00% or when the remaining charge time Tchg reaches the value 0. The end of battery 36 charging is also determined when the vehicle side inlet 54 and the vehicle connector 154a of the charging cable device 120 is disconnected.

In case it is determined that the connection switch 158a is pressed down by the user in step S100, the electronic control unit 70 is used to determine whether the vehicle side inlet 54 and the vehicle connector 154a of the charging cable device 120 is connected or disconnected(removed) (step S140) . The electronic control unit 70 can use the voltage on the vehicle side connection line 58 to determine the following three states, as shown in Figure 1. The first state is that the vehicle side inlet 54 is connected to the vehicle connector 154a of the charging cable device 120 and the connection switch 158a is on. The second state is that the vehicle side inlet 54 is connected to the vehicle connector 154a and the connection switch 158a is off. The third state is that the connection between the vehicle side inlet 54 and the vehicle connector 154a is disconnected. In case the vehicle side inlet 54 is still connected to the vehicle connector 154a of the charging cable device 120, the electronic control unit 70 retains the chargeable power Pin(Infrastructure Power) before the connection switch is operated (step S150) . Then, the electronic control unit 70 calculates the remaining charge time Tchg using the chargeable power Pin (step S160) . When the connection switch 158a is pushed down, the cable ECU 130 turns off the charging relay 152 based on a signal from the electronic control unit 70 that detects this. Therefore, the supply voltage Vin from the voltage sensor 51a has the value 0. If the chargeable power Pin is calculated based on this value of 0 supply voltage Vin, the chargeable power also has the value 0. As a result, the remaining charge time Tchg cannot be calculated. In the embodiment, when the vehicle side inlet 54 is still connected to the vehicle connector 154a even when connection switch 158a is pressed down, the remaining charge time Tchg continues to be displayed without any discrepancy until the connection switch 158a is turned on and charging is resumed, based on the operation of the connection switch 158a again by the user. Therefore, the electronic control unit 70 retains the chargeable power Pin before the connection switch 158a is switched off by operating the connection switch 158a and calculates the remaining charge time Tchg. Once the remaining charge time Tchg is calculated, the electronic control unit 70 reports the remaining charge time Tchg is reported by displaying it on display 78 (step S 170) . The electronic control unit 70 then determines whether or not the battery 36 is in the process of charging (step S200), and in the case that it determines that charging is in progress, it returns to the process of determining whether or not there is a power failure on the infrastructure side in step S100. In case there is no power failure on the infrastructure side and the connection switch 158a is turned off based on the operation of connection switch 158a by the user, the connection switch 158a is turned on based on another operation of the connection switch 158a by the user, the process (step 100, S110, S140-S170, S200) is repeated until the connection between the vehicle side inlet 54 and the vehicle connector 154a is disconnected. For the remaining charge time Tchg calculated using the chargeable power Pin before connection switch 158a is turned off, the same value is calculated, because neither the free capacity of battery 36 nor the chargeable power Pin changes.

If the electronic control unit 70 determines in step S140 that the vehicle side inlet 54 and the vehicle connector 154a of the charging cable device 120 is disconnected, the chargeable power Pin is cleared to the value 0. The electronic control unit 70 then cancels the display of the remaining charge time Tchg (step S190) and determines whether the battery 36 is in the process of being charged (step S200) . In this case, since the connection between the vehicle side inlet 54 and the vehicle connector 154a is disconnected and it is determined that charging is not in progress, the electronic control unit 70 terminates this process.

When the electronic control unit 70 determines that a power failure has occurred on the infrastructure side in step S100, the electronic control unit 70 sets the chargeable power Pin to the value 0 (step S180), cancel the display of the remaining charge time Tchg (step S190), and determines whether or not the battery 36 is in the process of being charged (step S200) . In this case, the electronic control unit 70 may determine that charging is in progress or that charging has been completed.

In the electric vehicle 20 of the embodiment, the electronic control unit 70 maintains the chargeable power Pin before the connection switch 158a is turned off and the remaining charge time Tchg is calculated, if the connection between the vehicle side inlet 54 and the vehicle connector 154a continues when the user presses down the connection switch 158a during charging. This allows the user to be informed by displaying the calculated remaining charge time Tchg on the display 78. This also prevents the user from feeling uncomfortable because the remaining charge time Tchg is not calculated and not displayed on the display 78. As a result of these factors, when the user turns off the connection switch 158a during charging, it can be handled more appropriately.

In the electric vehicle 20 of the embodiment, in case the user turns off the connection switch 158a during charging, and the connection between the vehicle side inlet 54 and the vehicle connector 154a is disconnected, the electronic control unit 70 sets the chargeable power Pin to the value 0 and cancel the display of the remaining charge time Tchg. As a result, it is possible to prevent the user from feeling uncomfortable due to the display of the remaining charging time Tchg even after charging is finished.

In the electric vehicle 20 of the embodiment, external charging is performed by connecting the commercial power supply 220 to the vehicle side inlet 54 of the electric vehicle 20 using the charging cable device 120. However, external charging may be performed by connecting the connector on the external power supply side to the vehicle side inlet 54 of the electric vehicle 20 without using the charging cable device 120.

In the electric vehicle 20 of the embodiment, the commercial power supply 220 that provides AC power is used as an external power source. However, a DC power supply that provides DC power may be used as the external power supply. In this case, instead of the power conversion circuit 52, the charger 50 may include a circuit that converts the power from the external power supply into power of a desired voltage.

In the electric vehicle 20 of the embodiment, the battery 36 is used as the power storage device. However, any device that can store electricity may be used, and a capacitor or the like may be used. The electric vehicle 20 of the embodiment is provided with the boost converter 40. However, electric vehicle 20 may not include boost converter 40.

The embodiment is in the form of an electric vehicle 20 equipped with a motor 32. However, it may also be in the form of a hybrid vehicle with an engine in addition to the motor 32, and be in the form of a vehicle equipped with a fuel cell.

The following is an explanation of the correspondence between the main elements of the embodiment and the main elements of the disclosure described in the section on means to solve the problem. In the embodiment, the battery 36 corresponds to a "power storage device," the power conversion circuit 52 and the vehicle side inlet 54 correspond to a "charger," and the electronic control unit 70 corresponds to a "controller".

The correspondence between the major elements of the embodiment and the major elements of the disclosure described in the means to solve a problem section is an example of how the embodiment can be used to specifically explain the embodiment of the disclosure described in the means to solve a problem section. This does not limit the elements of the disclosure described in the means to solve the problem section. In other words, interpretation of the disclosure described in the means to solve a problem section should be based on the description in that section, and the embodiment is only one specific example of the disclosure described in the means to solve a problem section.

The above is a description of the form for implementing this disclosure using the embodiment. However, the present disclosure is not limited in any way to these embodiments, and can of course be implemented in various forms within the scope that does not depart from the gist of the present disclosure .

### Industrial Applicability

This disclosure is applicable to the electric vehicle manufacturing industry and other applications.

## Claims

1. An electric vehicle (20) comprising:
a power storage device(36);
a charging device(50) capable of charging the power storage device(36) using power from an external power source(220);
a vehicle side connector (54) that can be connected to a cable side connector(154a) of a cable device(120) that connects the external power source(220) to the charging device(50);
a connection detection device(57,58) that detects presence or absence of a connection between the vehicle side connector (54) and the cable side connector(154a); and
a controller (70) programmed to control the charging device (50) when charging the power storage device(36) using power from the external power source (220) and calculates remaining charge time required to fully charge the power storage device(36) based on supplied power from the external power source(220);
**characterized in that** the cable device (120) has a connection switch (158a) that connects and disconnects a power line from the external power source (220) to the charging device (50), the connection switch(158a) transmitting a connection signal to the controller(70) indicating a connection state in which the power line from the external power source (220) to the charging device(50) is connected and a disconnection state in which the connection is disconnected; and
the controller(70) retains the supplied power before receiving the connection signal in the disconnected state and calculates the remaining charge time, when a connection signal of the disconnection state is received by operating the connection switch(158a) while the charging device(50) is charging the power storage device(36) using power from the external power source(220) with the charging device(50) connected to the external power source (220) via the cable device (120), and further when the connection between the vehicle side connector(54) and the cable side connector (154a) is detected by the connection detection device(57,58).

2. The electric vehicle (20) according to claim 1, wherein the controller(70) clears the supplied power when the disconnection between the vehicle side connector(54) and the cable side connector(154a) is detected by the connection detection device(57,58), when the connection signal of the disconnection state is received during charging of the power storage device(36).

3. The electric vehicle (20) according to either claim 1 or 2, wherein the controller (70) reports the remaining charge time.
